# EUROPÄISCHE PATENTANMELDUNG

(11) **EP 1 170 971 A2**
(43) Veröffentlichungstag der Anmeldung: **09.01.2002**
(21) Anmeldenummer: 01440170.7
(22) Anmeldetag: 14.06.2001
(51) Int. Cl.: H04Q 7/34

(54) **Netzwerkmanagement-Server**

(30) Priorität: 07.07.2000 DE 10033289
(71) Anmelder: ALCATEL, 75008 Paris (FR)
(72) Erfinder: Gerber, Markus, 73734 Esslingen (DE)
(74) Vertreter: Zinsinger, Norbert, Dipl.-Ing.

(57) **Zusammenfassung**

Die Erfindung betrifft ein Verfahren zur Unterstützung der Verwaltung eines Kommunikationsnetzes (KN1) und einen Netzwerkmanagement-Server zur Durchführung des Verfahrens. Der Aufbau einer Kommunikationsverbindung zwischen einem Mobilfunk-Endgerät (TE1 bis TE3) eines Teilnehmers (A, B, C) des Kommunikationsnetzes (KN1) und einem Netzwerkmanagement-Server (NMS) des Kommunikationsnetzes (KN1) wird von dem Mobilfunk-Endgerät (TE1 bis TE3) initiiert. Der Netzwerkmanagement-Server (NMS) kommuniziert mit dem Mobilfunk-Endgerät (TE1 bis TE3) über die initiierte Kommunikationsverbindung mittels eines WAP Protokolls. Der Netzwerkmanagement-Server (NMS1) ermittelt die Identität des Teilnehmers (A, B, C) und überprüft mittels einer Autorisierungsprozedur die Autorisierung des ermittelten Teilnehmers (A, B, C). Der Netzwerkmanagement-Server (NMS1) gestattet und ermöglicht dem Mobilfunk-Endgerät (TE1 bis TE3) bei ausreichender Autorisierung den Zugriff mittels des WAP Protokolls auf dem ermittelten Teilnehmer (A, B, C) zugeordnete Daten einer Teilnehmerverwaltungs-Datenbank (SMDB) des Netzwerkmanagementsystems (NMS) des Kommunikationsnetzes (KN1), in der die Art der von dem Teilnehmer innerhalb des Kommunikationsnetzes abonnierten Dienste und jeweilige zugeordnete Parameter für die Verwaltung des Kommunikationsnetzes durch das Netzwerkmanagementsystem festgelegt sind.

## Beschreibung

Die Erfindung betrifft ein Verfahren zur Unterstützung der Verwaltung eines Kommunikationsnetzes sowie einen Netzwerkmanagement-Server zur Unterstützung der Verwaltung eines Kommunikationsnetzes.

Die Erfindung geht von einem üblichen Netzwerkmanagementsystem für Telekommunikationsnetze aus, wie es beispielsweisein in dem Artikel "Telecommunication Management Network (TMN): Architektur, Schnittstellen und Anwendungen", ntz Bd. 43, Heft 6, Seiten 466 bis 469, von Rüdiger Falkner und Harald Müller beschrieben ist.

Das Netzwerkmanagementsystem dient dazu, die Verwaltung eines Telekommunikationsnetzes und der in diesem Telekommunikationsnetz bereitgestellten Dienste zu unterstützen. Das Netzwerkmanagementsystem stellt hierfür Management-Funktionen für Telekommunikationsnetze und Dienste zur Verfügung und Unterstützt die Kommunikation zwischen diesen Management-Funktionen. Aus architektonischer Sicht besteht das Netzwerkmanagementsystem aus Netzführungszentralen und Bedienstationen des Netzbetreibers des Telekommunikationsnetzes, die über ein Daten-Kommunikationsnetz mit den Netzelementen des Telekommunikationsnetzes kommunizieren. Über die Bedienstationen kommuniziert ausschließlich das Bedienpersonal des Netzbetreibers mit den Netzführungszentralen. Da jeder Zugriff auf die Netzführungszentralen erheblichen Einfluß auf die Funktionsweise des Telekommunikationsnetzes haben kann, werden innerhalb des Netzwerkmanagementsystems besondere Sicherheitsvorkehrungen getroffen, um nur dem dazu berechtigten Bedienpersonal des Netzbetreibers Zugriff über die Bedienstationen auf Netzwerkmanagementfunktionen zu gewähren.

Der Erfindung liegt nun die Aufgabe zugrunde, die Verwaltung eines Kommunikationsnetzes und der innerhalb des Kommunikationsnetzes bereitgestellten Dienste zu optimieren.

Diese Aufgabe wird gelöst durch ein Verfahren zur Unterstützung der Verwaltung eines Kommunikationsnetzes nach der Lehre von Anspruch 1 sowie durch einen Netzwerkmanagement-Server zur Unterstützung der Verwaltung eines Kommunikationsnetzes nach der Lehre von Anspruch 8.

Der Erfindung liegt hierbei der Gedanke zugrunde, Teilnehmern eines Kommunikationsnetzes einen direkten Zugriff auf spezielle Teilnehmerverwaltungsfunktionen des Netzwerkmanagementsystems mittels eines Mobilfunkendgerätes über ein WAP Protokoll zu ermöglichen. Der Begriff WAP Protokoll steht hierbei für ein Protokoll, das die Übertragung von XML Inhalten (XML = Extended Markup Language, beispielsweise WTML (Wireless Terminal Markup Language) oder HTML (Hypertext Markup Language)) über die Funkschnittstelle eines zellularen Funknetzes ermöglicht. Beispiele für ein WAP Protokoll sind das auf dem GSM Standard aufsetzende Wireless Application Protocol (WAP) oder entsprechende Protokolle des UMTS Standards zur Übertragung von XML Inhalten über die Funkschnittstelle in einem UMTS Kommunikationssystem.

Der Vorteil der Erfindung besteht zum einen darin, daß so eine effektivere und mehr an die Bedürfnisse der Teilnehmer des Kommunikationsnetzes angepaßte Verwaltung des Kommunikationsnetzes ermöglicht wird.

Weiter ist den Teilnehmern eine Adaption der Verwaltung des Kommunikationsnetzes von jedem Ort aus und zu jeder Zeit möglich, so daß eine äußerst schnelle Anpassung der Verwaltung des Kommunikationsnetzes an veränderte Bedürfnisse der Teilnehmer erfolgen kann.

Weiter ist es einem Teilnehmer auch möglich, auf bestimmte Netzwerkmanagementinformationen zu jeder Zeit und an jedem Ort zuzugreifen, und sich so über den aktuellen Zustand zu informieren. Damit erhöht sich die Kundenfreundlichkeit der Verwaltung des Kommunikationsnetzes.

Vorteilhafte Ausgestaltungen der Erfindung sind den Unteransprüchen zu entnehmen.

Im folgenden wir die Erfindung anhand mehrerer Ausführungsbeispiele unter Zuhilfenahme beiliegender Zeichnungen beispielhaft erläutert.
- Fig. 1: zeigt ein Blockschaltbild eines Kommunikationssystems mit einem erfindungsgemäßen Netzwerkmanagement-Server.
- Fig. 2: zeigt eine funktionelle Darstellung des NetzwerkmanagementServers nach Fig. 1.

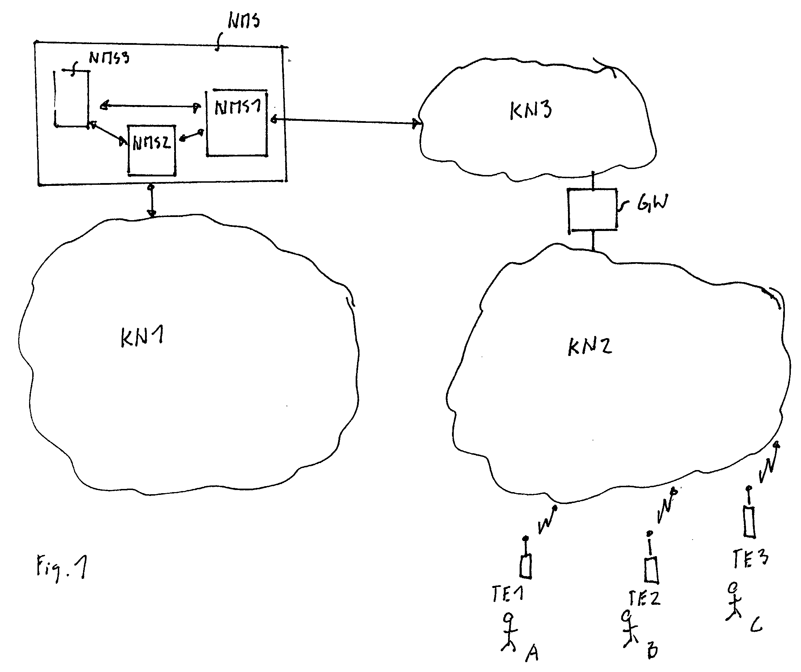

Fig. 1 zeigt drei Kommunikationsnetze KN1 bis KN3, mehrere Netzwerkmanagement-Server NMS1 bis NMS3, eine Netzübergangseinheit GW und drei Mobilfunk-Endgeräte TE1 bis TE3, die einem Teilnehmer A, B bzw. C zugeordnet sind. Die Netzwerkmanagement-Server NMS1 bis NMS3 bilden ein Netzwerkmanagementsystem NMS. Die Anzahl der Mobilfunk-Endgeräte, der Teilnehmer und der Netzwerkmanagement-Server ist beispielhaft gewählt.

Das Kommunikationsnetz KN2 ermöglicht die Kommunikation zwischen den Mobilfunk-Endgeröten TE1 bis TE3. Das Kommunikationsnetz KN1 wird von einem Mobilfunknetz, beispielsweise von einem zellularen Mobilfunknetz nach dem GSM oder UMTS Standard (GSM = Global System Mobile Communication, UMTS = Universal Mobile Telecommunication System) gebildet. Es ist auch möglich, daß das Kommunikationsnetz KN2 ein oder mehrere weitere Fernsprechnetze (Mobilfunk-Netze oder Festnetze) oder Datennetze mitumfaßt, die auch verschiedenen Netzbetreibern zugeordnet sein können.

Das Kommunikationsnetz KN1 wird von einem Mobilfunknetz, beispielsweise von einem zellularen Mobilfunknetz nach dem GSM Standard oder UMTS Standard oder von einem Festnetz, beispielsweise von einem ISDN Fernsprechnetz (ISDN = Integrated Services Digital Network) oder einem PSTN Fernsprechnetz gebildet (PSTN = Public Switched Telephone Network). Es ist auch möglich, daß das Kommunikationsnetz KN1 ein oder mehrere weitere Fernsprechnetze (Mobilfunk-Netze oder Festnetze) oder Datennetz (z. B. für voice over IP) mitumfaßt, die auch verschiedenen Netzbetreibern zugeordnet sein können.

Weiter ist es auch möglich, daß die Kommunikationsnetze KN1 und KN2 von ein und demselben Kommunikationsnetz gebildet werden.

Eine weitere Möglichkeit besteht darin, daß es sich bei dem Kommunikationsnetz KN1 um ein reines Datennetz handelt. Ein solches Datennetz verwendet beispielsweise als Layer 2 Kommunikationsprotokolle ATM- und LAN-Protokolle(ATM = Asynchrounous Transfer Modus, LAN = Local Area Access Network), beispielsweise Ethernet-Protokolle, und als Layer 3 Protokolle ein IP Protokoll. Über ein solches Datennetz kann auch eine Sprach- (voice over IP) oder Bildkommunikation geführt werden.

Bei dem Kommunikationsnetz KN3 handelt es sich um ein Datennetz, das als Layer 3 Kommunikationsprotokoll das IP Protokoll (IP = Internet Protocol) verwendet.

Die Netzwerkmanagement-Server NMS1 bis NMS3 erbringen die Netzwerkmanagementfunktionen für das Kommunikationsnetz KN1 und bilden in ihrer Gesamtheit das Netzwerkmanagementsystem NMS, das das Kommunikationsnetze KN1 und die in dem Kommunikationsnetz KN1 bereitgestellten Dienste (Kommunikationsdienste und sonstige Dienste) verwaltet. Es ist auch möglich, daß das Netzwerkmanagementsystem NMS nur einen Netzwerkmanagement-Server umfaßt. Zur Erbringung der Netzwerkmanagementfunktionen interagieren die Netzwerkmanagement-Server NMS1 bis NMS3 miteinander und kommunizieren mit den Netzelementen des Kommunikationsnetzes KN1. Es natürlich nicht notwendig, daß jeder der Netzwerkmanagement-Server NMS1 bis NMS3 mit den Netzelementen des Kommunikationsnetzes KN1 kommuniziert. Netzelement sind hierbei beispielsweise Vermittlungsstellen, Crossconnects, Router, Brigdes oder Gateways des Kommunikationsnetzes KN1. Für die Kommunikation mit den Netzelement wird beispielsweise das SNMP Protokoll (SNMP = Simple Network Management Protocol, vorteilhaft in Datennetzen) oder das CMIP Protokoll (Common Management Information Protocol, vorteilhaft in großräumigen Kommunikationsnetzen) verwendet.

Der Netzwerkmanagement-Server NMS1 ist somit Teil eines Netzwerkmanagementsystems das ein Fernsprechnetz verwaltet. Es ist jedoch auch Möglich, daß der Netzwerkmanagement-Server NMS1 Teil eines Netzwerkmanagementsystems ist, das ein Datennetz verwaltet.

Hardwaremäßig werden die Netzwerkmanagement-Server NMS1 bis NMS3 jeweils von einem oder von mehreren über ein Kommunikationsmedium verbundenen Rechnern gebildet. Auf dieser Hardware-Plattform setzt eine SW Systemplattform, die beispielsweise aus einem Betriebssystem und einem Datenbanksystem besteht, und Applikationsprogramme auf. Die Applikationsprogramme steuern bei ihrem Ablauf auf der Hardware- und Softwareplattform (Systemplattform) die Funktionen der Netzwerkmanagement-Server NMS1 bis NMS3.

Die Mobilfunk-Endgerät TE1 bis TE3 sind mit einer Funktionalität ausgerüstet, die es ihnen ermöglicht, mittels eines WAP Protokolls über die Netzübergangseinheit GW mit dem Netzwerkmanagement-Server NMS1 zu kommunizieren. Der Begriff WAP Protokoll im Sinne dieser Erfindung steht hierbei für ein Protokoll, das die Übertragung von XML Inhalten (XML = Extended Markup Language, beispielsweise WTML (Wireless Terminal Markup Language) oder HTML (Hypertext Markup Language) über die Funkschnittstelle eines zellularen Funknetzes ermöglicht. Beispiele für ein WAP Protokoll sind das auf dem GSM Standard aufsetzende Wireless Application Protocol (WAP) oder entsprechende Protokolle des UMTS Standards zur Übertragung von XML Inhalten über die Funkschnittstelle in einem UMTS Kommunikationssystem.

Bei den Teilnehmern A bis C handelt es sich um Teilnehmer des Kommunikationsnetzes KN1. Dies bedeutet, daß die Teilnehmer A bis C jeweils als Benutzer des Kommunikationsnetzes KN1 registriert sind oder Dienste des Kommunikationsnetzes KN1 abonniert haben. Sie verfügen so beispielsweise jeweils zumindest über ein Endgerät, das mit dem Kommunikationsnetz direkt oder indirekt verbunden ist.

Bei der Netzübergangseinheit GW handelt es sich um ein Gateway, das den Aufbau von Datenverbindungen vom Kommunikationsnetz KN2 in das Kommunikationsnetz KN3 ermöglicht. Es ist auch möglich, daß die Netzübergangseinheit GW hierbei eine Konvertierung von über diese Netzgrenze hinweg transportierte XML Inhalten durchführt, beispielsweise WTML Inhalte in HTML Inhalte und umgekehrt konvertiert.

Der Teilnehmer A initiiert den Zugriff auf den Netzwerkmanagement-Server NMS1, beispielsweise durch Drücken einer Folge von Eingabetasten des Mobilfunk-Endgerätes TE1 oder durch ein Sprachkommando an das Mobilfunk-Endgerät TE1.

Das Mobilfunk-Endgerät TE1 initiiert daraufhin den Aufbau einer Kommunikationsverbindung zwischen dem Mobilfunk-Endgerät TE1 des Teilnehmers A des Kommunikationsnetzes KN1 und dem Netzwerkmanagement-Server NMS1 des Kommunikationsnetzes KN1. Das Mobilfunk-Endgerät TE1 und der Netzwerkmanagement-Server NMS1 kommunizieren über die initiierte Kommunikationsverbindung mittels des WAP Protokolls. Der Netzwerkmanagement-Server NMS1 ermittelt die Identität des Teilnehmers, also die Identität des Teilnehmers A, und überprüfen mittels einer Autorisierungsprozedur die Autorisierung des ermittelten Teilnehmers. Bei ausreichender Autorisierung gestattet und ermöglicht der Netzwerkmanagement-Server NMS1 dem Mobilfunk-Endgerät TE1 den Zugriff auf dem ermittelten Teilnehmer zugeordneten Daten einer Teilnehmerverwaltungs-Datenbank des Netzwerkmanagementsystems NMS des Kommunikationsnetzes KN1 mittels des WAP Protokolls. Bei der Teilnehmerverwaltungs-Datenbank des Netzwerkmanagementsystems NMS handelt es sich hierbei um diejenige Datenbank des Netzwerkmanagementsystems NMS, in der die Art der von dem Teilnehmer innerhalb des Kommunikationsnetzes abonnierten Dienste und jeweilige zugeordnete Parameter für die Verwaltung des Kommunikationsnetzes durch das Netzwerkmanagementsystem NMS festgelegt sind.

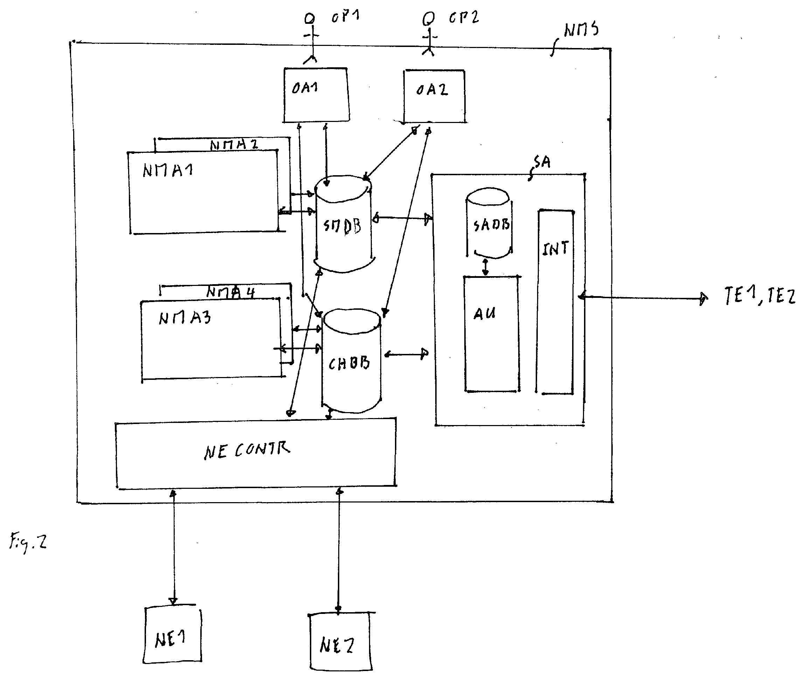

Anhand von Fig. 2 wird nun beispielhaft ein möglicher detaillierter Aufbau des Netzwerkmanagement-Servers NMS1 und des Verfahrens zur Unterstützung der Verwaltung des Kommunikationsnetzes KN1 erläutert.

Aus funktioneller Sicht weist das Netzwerkmanagementsystem NMS unter anderem eine Teilnehmerzugangseinheit SA, mehrere Operatorzugangseinheiten OA1 und OA2, mehrere Netzwerkmanagementapplikationen NMA1 bis NMA4, eine Netzsteuereinheit NECONTR und ein Teilnehmerverwaltungs-Datenbank SMDB und eine Vergebührungs-Datenbank CHDB auf. Weiter zeigt Fig. 2 beispielhaft zwei Netzelemente NE1 und NE2 des Kommunikationsnetzes KN1.

Die Operatorzugangseinheiten OA1 und OA2 ermöglichen den Zugriff von Bedienpersonal des Netzbetreibers des Kommunikationsnetzes KN1 auf die Teilnehmerverwaltungs-Datenbank SMDB und die Vergebührungs-Datenbank CHDB.

Die Netzsteuereinheit NECONTR hält die Verbindung mit den Netzelemente des Kommunikationsnetze KN1, also mit den Netzelementen NE1 und NE2, steuert diese Netzelement und empfängt Zustandsdaten von diesen Netzelementen. Die Netzsteuereinheit NECONTR liest in der Teilnehmerverwaltungs-Datenbank SMDB abgespeicherte Daten aus und steuert die Netzelemente NE1 und NE2 derart an, daß den Teilnehmern des Kommunikationsnetzes KN1 Dienste entsprechend den hierzu in der Teilnehmerverwaltungs-Datenbank SMDB abgespeicherten Daten bereitgestellt werden. Weiter verändert sie in der Teilnehmerverwaltungs-Datenbank SMDB und der Vergebührungs-Datenbank CHDB abgespeicherte Daten, wenn sie entsprechende Informationen von den Netzelementen NE1 und NE2 erhält. Beispielsweise verändert sie in der Vergebührungs-Datenbank CHDB abgespeicherte Daten, wenn sie Gebühreninformationen von den Netzelementen NE1 und NE2 empfängt.

Die Netzwerkmanagementapplikationen NMA1 bis NMA4 stellen Applikationen dar, die jeweils spezielle Aufgaben im Rahmen der Erbringung von Netzwerkmanagementfunktionen erfüllen. Beispiele für solche Aufgaben sind Gebührenberechnung, Gebühreneinzug, Fehler-Management, QoS Management (QoS = Quality of Service), Konfigurations-Management, Problem-Management. Die Anzahl der Netzwerkmanagementapplikationen NMA1 bis NMA4 ist beispielhaft gewählt. Die Netzwerkmanagementapplikationen NMA1 bis NMA2 greifen bei der Erbringung ihrer Aufgabe auf die Teilnehmerverwaltungs-Datenbank SMDB zu, lesen Daten aus dieser Datenbank aus und verändern u. U. in der Teilnehmerverwaltungs-Datenbank SMDB abgespeicherte Daten. Die Netzwerkmanagementapplikationen NMA3 bis NMA4 greifen bei der Erbringung ihrer Aufgabe auf die Vergebührungs-Datenbank CHDB zu, lesen Daten aus dieser Datenbank aus und verändern u. U. in der Vergebührungs-Datenbank CHDB abgespeicherte Daten.

Die Teilnehmerzugangseinheit SA ermöglicht Teilnehmern unter speziellen Vorraussetzung einen Zugriff auf speziell, in speziellen Datenbanken des Netzwerkmanagementsystems NMS, nämlich der Teilnehmerverwaltungs-Datenbank SMDB oder Vergebührungs-Datenbank CHDB abgespeicherte Daten mittels des WAP Protokolls. Es ist hierbei auch möglich, daß ein Zugriff auf die Vergebührungs-Datenbank CHDB über die Teilnehmerzugangseinheit SA nicht möglich ist.

In der Teilnehmerverwaltungs-Datenbank SMDB sind diejenigen Daten des Netzwerkmanagementsystems NMS abgespeichert, durch die die Art der von dem Teilnehmer innerhalb des Kommunikationsnetzes abonnierten Dienste und jeweilige zugeordnete Parameter für die Verwaltung des Kommunikationsnetzes KN durch das Netzwerkmanagementsystem NMS festgelegt sind. Weiter sind in der Teilnehmerverwaltungs-Datenbank SMDB auch weitere teilnehmerspezifische Parameter abgespeichert, beispielsweise Parameter, die globale Parameter für alle Dienste eines Teilnehmers darstellen.

In der Vergebührungs-Datenbank CHDB sind die für die Nutzung von Diensten des Kommunikationsnetzes angefallen Gebühren abgespeichert.

Die Teilnehmerzugangseinheit SA weist aus funktioneller Sicht eine Zugangsdatenbank SABD, eine Steuereinheit AU und eine Schnittstelleneinheit INT auf.

Zumindest die Funktionen der Steuereinheit AU und der Schnittstelleneinheit INT werden von den Hardware- und Softwarekomponenten des Netzwerkmanagement-Servers NMS1 erbracht. Es ist natürlich auch möglich, daß weitere der in Fig. 2 gezeigten funktionellen Komponenten von dem Netzwerkmanagement-Server NMS1 erbracht werden. Es ist so auch möglich, daß sämtliche der in Fig. 2 gezeigten funktionellen Komponenten des Netzwerkmanagementsystems NMS von dem Netzwerkmanagement-Server NMS1 erbracht werden.

Die Schnittstelleneinheit INT1 dient der Kommunikation mit den Mobilfunk-Endgeräten von Teilnehmern des Kommunikationsnetzes KN1 mittels des WAP Protokolls, also beispielsweise mit den Mobilfunkendgeräten TE1 bis TE3.

Die Schnittstelleneinheit INT1 verfügt somit über die notwendigen Komponenten zur Bearbeitung des Protokollstacks des Kommunikationsnetzes KN3, also beispielsweise zur Bearbeitung eines ATM Protokolls als Layer 2 Protokoll und des TC/IP Protokollstacks (TCP = Transport Capability Part). Weiter verfügt sie über einen Browser zur Interpretation von XML Inhalten, der an die Besonderheiten der Kommunikation von XML Inhalten mittels des WAP Protokolls angepaßt ist. Vorzugsweise verfügt die Schnittstelleneinheit INT über ein WAP Interface, das den WAP Protokollstack bearbeitet. Es ist jedoch auch möglich, daß die Netzübergangseinheit GW als WAP Gateway fungiert, so daß keine Bearbeitung des WAP Protokolls durch die Schnittstelleneinheit INT mehr notwendig ist.

Die Steuereinheit AU ermittelt, wenn der Aufbau einer Kommunikationsverbindung von einem Mobilfunk-Endgerät eines Teilnehmers des Kommunikationsnetzes KN1 zu dem Netzwerkmanagement-Server NMS1 initiiert wird, die Identität dieses Teilnehmers. Sodann überprüft die Steuereinheit AU mittels einer Autorisierungsprozedur die Autorisierung des ermittelten Teilnehmers.

Zur Erbringung dieser Funktionen greift die Steuereinheit SADB auf in der Zugangsdatenbank SADB abgespeicherte teilnehmerspezifische Identifizierungs- und Autorisierungsdaten zu.

Die Identifizierung des Teilnehmers kann beispielsweise dadurch realisiert werden, daß die Steuereinheit AU das Mobilfunk-Endgerät auffordert, eine teilnehmerspezifische oder endgerätespezifische Kennung an die Zugriffseinheit AU1 zu senden. Eine Kennung kann beispielsweise in einer dem Teilnehmer zugeordneten Fernsprechrufnummer oder in dem Namen des Teilnehmers bestehen. Es ist auch möglich, daß die Steuereinheit AU hierzu eine mit der Anforderung automatisch zugesendete Kennung auswertet.

In der Zugangsdatenbank SADB ist zur Identifizierung der Teilnehmer zu jeder netzwerkmanagementinternen Teilnehmerkennung diejenigen teilnehmerspezifische oder endgerätespezifische Kennung abgespeichert, durch die sich ein Teilnehmer gegenüber der Steuereinheit AU identifiziert. Es ist auch möglich, daß diese Kennungen von den jeweiligen Teilnehmern verändert werden können.

Die Autorisierung des Teilnehmers führt die Steuereinheit AU beispielsweise dadurch aus, daß sie das Mobilfunk-Endgerät auffordert, eine der Kennung zugeordnetes Kennwort zu senden. Eine weitere Möglichkeit besteht darin, eine Autorisierung mittels asynchronerer Schlüssel durchzuführen. Die Steuereinheit AU sendet eine Zufallszahl an das Mobilfunkendgerät, die von diesem mit einem teilnehmerspezifischen oder endgerätespezifischen Schlüssel verschlüsselt wird und sodann an die Steuereinheit AU zurückgesendet wird. Mittels eines öffentlichen Schlüssels kann die Steuereinheit AU sodann überprüfen, ob das Mobilfunk-Endgerät autorisiert ist oder nicht.

Weiter ist es vorteilhaft, daß die Steuereinheit nach Ermittlung des Teilnehmers überprüft, ob der ermittelte Teilnehmer in einer in der Zugangsdatenbank SADB abgespeicherten Liste aufgeführt ist, die zu einem Zugriff auf Daten der Teilnehmerverwaltungs-Datenbank SMDB und Vergebührungs-Datenbank CHDB berechtigt sind. Hierzu kann in der Zugangsdatenbank SADB für jeden berechtigten Teilnehmer ein Datensatz abgespeichert sind, der die Zugriffsmöglichkeiten (Lesen/ Verändern) und die Art der Daten beschreibt, auf die diesem Teilnehmer ein Zugriff gestattet ist.

Bei ausreichender Autorisierung gestattet und ermöglicht die Steuereinheit AU sodann dem die Kommunikationsverbindung initiierenden Mobilfunk-Endgerät den Zugriff mittels des WAP Protokolls auf dem ermittelten Teilnehmer in der Teilnehmerverwaltungs-Datenbank SMDB des Netzwerkmanagementsystems NMS zugeordneten Daten, in der die Art der von dem Teilnehmer innerhalb des Kommunikationsnetzes abonnierten Dienste und jeweilige zugeordnete Parameter für die Verwaltung des Kommunikationsnetzes durch das Netzwerkmanagementsystem festgelegt sind.

Die Steuereinheit AU ermittelt hierfür den Speicherbereich der Teilnehmerverwaltungs-Datenbank SMDB, in dem die dem ermittelten Teilnehmer zugeordneten Daten abgelegt sind, die die Art der von dem Teilnehmer innerhalb des Kommunikationsnetzes abonnierten Dienste und jeweilige zugeordnete Parameter festlegen. Entsprechend den in der Zugangsdatenbank abgelegten Daten ermöglicht die Steuereinheit AU es sodann dem Mobilfunkendgerät, Daten aus diesem Speicherbereich der Teilnehmerverwaltungs-Datenbank SMDB im Rahmen eines Dialoges basierend auf dem Austausch von mittels des WAP Protokolls transportierten XML Inhalten auszulesen und zu verändern. Es ist vorteilhaft, wenn die Steuereinheit AU hierbei eine teilnehmerspezifische Abbildung dieses Datenbereichs durchführt .

Bei einem solchen Zugriff auf die Teilnehmerverwaltungs-Datenbank SMDB kann das Mobilfunk-Endgerät (TE1 bis TE3) durch Veränderung solcher Daten die dem ermittelten Teilnehmer im Kommunikationsnetz KN1 bereitgestellten Dienste verändern, indem es in der Teilnehmerverwaltungs-Datenbank SMDB Dienste löscht oder hinzufügt. Dienste können hierbei Kommunikationsdienste, aber auch sonstige Dienste sein, die einem Teilnehmer innerhalb des Kommunikationsnetzes KN1 bereitgestellt werden können.

Durch die Veränderung von jeweiligen Diensten zugeordnete Parametern kann von dem Mobilfunk-Endgerät beispielsweise die für einen Dienst vereinbarte Dienstgüte (quality of service) verändert werden und sonstige Dienstparameter, z. B. VPN Parameter (VPN = Virtual Private Network) verändert werden.

Weiter ist es auch möglich, daß das Mobilfunk-Endgerät beim Zugriff auf die Teilnehmerverwaltungs-Datenbank die Vergebührung von dem Teilnehmer im Kommunikationsnetz KN1 bereitgestellten Dienste verändert, indem es in der Teilnehmerverwaltungs-Datenbank SMDB Diensten zugeordnete Parameter verändert. Beispielsweise kann es den für einen bestimmten Dienst festgelegten Tarif verändern.

Weiter ist es auch möglich, daß das Mobilfunk-Endgerät beim Zugriff auf die Teilnehmerverwaltungs-Datenbank SMDB den Gebühreneinzug der für den Teilnehmer im Kommunikationsnetz KN1 anfallenden Gebühren verändert, indem es in der Teilnehmerverwaltungs-Datenbank SMDB dem Teilnehmern zugeordnete globale Parameter verändert. Beispielsweise kann das Mobilfunk-Endgerät die Bankverbindung ändern, über die die für den ermittelten Teilnehmer innerhalb des Kommunikationsnetzes KN1 erbrachten Leistungen vergebührt und die damit verbundenen Gebühren vom ermittelten Teilnehmer eingezogen werden.

Die Steuereinheit AU gestattet und ermöglicht dem Mobilfunk-Endgerät weiter bei ausreichender Autorisierung den Zugriff mittels des WAP Protokolls auf dem ermittelten Teilnehmer zugeordnete Daten der Vergebührungs-Datenbank CHDB des Kommunikationsnetzes KN1, in der die für die Nutzung von Diensten des Kommunikationsnetzes KN1 angefallen Gebühren abgespeichert sind. Der Teilnehmer kann sich so mittels dieser Funktionalität einen Überblick über die für Leistungen innerhalb des Kommunikationsnetzes KN1 angefallenen Kosten verschaffen.

## Patentansprüche

1. Verfahren zur Unterstützung der Verwaltung eines Kommunikationsnetzes (KN1),
**dadurch gekennzeichnet, daß** der Aufbau einer Kommunikationsverbindung zwischen einem Mobilfunk-Endgerät (TE1 bis TE3) eines Teilnehmers (A, B, C) des Kommunikationsnetzes (KN1) und einem Netzwerkmanagement-Server (NMS1) des Kommunikationsnetzes (KN1) von dem Mobilfunk-Endgerät (TE1 bis TE3) initiiert wird, daß der Netzwerkmanagement-Server (NMS1) mit dem Mobilfunk-Endgerät (TE1 bis TE3) über die initiierte Kommunikationsverbindung mittels eines WAP Protokolls kommuniziert, daß der Netzwerkmanagement-Server (NMS1) die Identität des Teilnehmers (A, B, C) ermittelt und mittels einer Autorisierungsprozedur die Autorisierung des ermittelten Teilnehmers (A, B, C) überprüfen, daß der Netzwerkmanagement-Server (NMS1) dem Mobilfunk-Endgerät (TE1 bis TE3) bei ausreichender Autorisierung den Zugriff auf dem ermittelten Teilnehmer (A, B, C) zugeordnete Daten einer Teilnehmerverwaltungs-Datenbank (SMDB) des Netzwerkmanagementsystems (NMS) des Kommunikationsnetzes (KN1), in der die Art der von dem Teilnehmer innerhalb des Kommunikationsnetzes abonnierten Dienste und jeweilige zugeordnete Parameter für die Verwaltung des Kommunikationsnetzes durch das Netzwerkmanagementsystem festgelegt sind, mittels des WAP Protokolls gestattet und ermöglicht.

2. Verfahren nach Anspruch 1, **dadurch gekennzeichnet, daß** das Mobilfunk-Endgerät (TE1 bis TE3) beim Zugriff auf die Teilnehmerverwaltungs-Datenbank (SMDB) die dem Teilnehmer im Kommunikationsnetz (KN1) bereitgestellten Dienste verändert, indem es in der Teilnehmerverwaltungs-Datenbank Dienste löscht oder hinzufügt.

3. Verfahren nach Anspruch 1, **dadurch gekennzeichnet, daß** das Mobilfunk-Endgerät (TE1 bis TE3) beim Zugriff auf die Teilnehmerverwaltungs-Datenbank die Vergebührung von dem Teilnehmer im Kommunikationsnetz (KN1) bereitgestellten Dienste verändert, indem es in der Teilnehmerverwaltungs-Datenbank (SMDB) Diensten zugeordnete Parameter verändert.

4. Verfahren nach Anspruch 1, **dadurch gekennzeichnet, daß** das Mobilfunk-Endgerät (TE1 bis TE3) beim Zugriff auf die Teilnehmerverwaltungs-Datenbank den Gebühreneinzug der für den Teilnehmer im Kommunikationsnetz (KN1) anfallenden Gebühren verändert, indem es in der Teilnehmerverwaltungs-Datenbank (SMDB) dem Teilnehmern zugeordnete globale Parameter verändert.

5. Verfahren nach Anspruch 1, **dadurch gekennzeichnet, daß** der Netzwerkmanagement-Server (NMS1) dem Mobilfunk-Endgerät (TE1 bis TE3) weiter bei ausreichender Autorisierung den Zugriff auf dem ermittelten Teilnehmer zugeordnete Daten einer Vergebührungs-Datenbank (CHDB) des Kommunikationsnetzes (KN1), in der die für die Nutzung von Diensten des Kommunikationsnetzes angefallen Gebühren abgespeichert sind, mittels des WAP Protokolls gestattet und ermöglicht.

6. Verfahren nach Anspruch 1, **dadurch gekennzeichnet, daß** die Kommunikation zwischen dem Mobilfunk-Endgerät und dem Netzwerkmanagement-Server über ein WAP Gateway erfolgt.

7. Verfahren nach Anspruch 1, **dadurch gekennzeichnet, daß** der Netzwerkmanagement-Server über ein WAP Interface verfügt.

8. Netzwerkmanagement-Server (NMS1) zur Unterstützung der Verwaltung eines Kommunikationsnetzes (KN1),
**dadurch gekennzeichnet, daß** der Netzwerkmanagement-Server (NMS1) mit einer Schnittstelleneinheit (INT) zur Kommunikation mit Mobilfunk-Endgeräten (TE1 bis TE3) von Teilnehmern (A, B, C) des Kommunikationsnetzes (KN1) mittels eines WAP Protokolls versehen ist, daß der Netzwerkmanagement-Server (NMS1) mit einer Steuereinheit (AU) versehen ist, die so ausgestaltet ist, daß sie, wenn der Aufbau einer Kommunikationsverbindung von einem Mobilfunk-Endgerät (TE1 bis TE3) eines Teilnehmers (A, B, C) des Kommunikationsnetzes (KN1) zu dem Netzwerkmanagement-Server (NMS1) initiiert wird, die Identität des Teilnehmers (A, B, C) ermittelt und mittels einer Autorisierungsprozedur die Autorisierung des ermittelten Teilnehmers (A, B, C) überprüfen, und daß die Steuereinheit weiter so ausgestaltet ist, daß sie dem die Kommunikationsverbindung initiierenden Mobilfunk-Endgerät (TE1 bis TE3) bei ausreichender Autorisierung den Zugriff auf dem ermittelten Teilnehmer (A, B, C) zugeordnete Daten einer Teilnehmerverwaltungs-Datenbank (SMDB) des Netzwerkmanagementsystems (NMS) des Kommunikationsnetzes (KN1), in der die Art der von dem Teilnehmer innerhalb des Kommunikationsnetzes abonnierten Dienste und jeweilige zugeordnete Parameter für die Verwaltung des Kommunikationsnetzes durch das Netzwerkmanagementsystem festgelegt sind, mittels des WAP Protokolls gestattet und ermöglicht.

9. Netzwerkmanagement-Server nach Anspruch 8, **dadurch gekennzeichnet, daß** der Netzwerkmanagement-Server (NMS1) Teil eines Netzwerkmanagementsystems (NMS) ist, das ein Fernsprechnetz verwaltet.

10. Netzwerkmanagement-Server nach Anspruch 8, **dadurch gekennzeichnet, daß** der Netzwerkmanagement-Server Teil eines Netzwerkmanagementsystems ist, das ein Datennetz verwaltet.
